# EUROPÄISCHE PATENTSCHRIFT

(11) **EP 1 295 484 B1**
(45) Veröffentlichungstag und Bekanntmachung des Hinweises auf die Patenterteilung: **02.01.2004**
(21) Anmeldenummer: 01933984.5
(22) Anmeldetag: 17.05.2001
(51) Int. Cl.: H04N 9/11, H04N 5/253

(54) **VERFAHREN UND VORRICHTUNG ZUR DEFEKTERKENNUNG UND/ODER -KORREKTUR BEI DER DIGITALEN BILDVERARBEITUNG**
METHOD AND DEVICE FOR IDENTIFYING AND/OR CORRECTING DEFECTS DURING DIGITAL IMAGE PROCESSING
PROCEDE ET DISPOSITIF DE RECONNAISSANCE ET/OU DE CORRECTION DE DEFAUTS DANS LE TRAITEMENT D'IMAGES NUMERIQUE

(30) Priorität: 16.06.2000 DE 10029826
(43) Veröffentlichungstag der Anmeldung: 26.03.2003
(73) Patentinhaber: Agfa-Gevaert AG, 51373 Leverkusen (DE)
(72) Erfinder: DAMM, Tobias, 81545 München (DE); SCHUHRKE, Thomas, 81549 München (DE); TARESCH, Gudrun, 80337 München (DE)
(86) Internationale Anmeldenummer: PCT/EP2001/005650
(87) Internationale Veröffentlichungsnummer: WO 2001/097529

(56) Entgegenhaltungen:
- EP-A- 0 893 914
- WO-A-99/46729
- DE-A- 19 635 544

## Beschreibung

Die Erfindung geht aus von einem Verfahren und einer Vorrichtung zur Defekterkennung und/oder -korrektur bei der digitalen Bildverarbeitung nach dem Oberbegriff der Ansprüche 1, 4 bzw. 14.

Um durch Kratzer oder Staub verursachte Defekte in Filmen oder gescannten Bildern korrigieren zu können, wird nach der US 5,266,805 (oder nach der WO 99/46729 oder der EP-A-0 893 914) neben den üblichen Rot-, Grün- und Blauabtastungen bzw. Scans zusätzlich ein Infrarot-Scan durchgeführt. Am Ort des Defektes kann die Infrarotstrahlung den Film nicht ungehindert durchstrahlen und wird gestreut, sodaß sich die durch den Film mit Kratzer oder Staub hindurchtretende Infrarotstrahlung reduziert. Diese Reduktion ist aber ein Hinweis auf einen Fehler im Bild und demgemäß wird das zugehörige Pixel gekennzeichnet, sodaß es anschließend korrigiert werden kann. Für die Korrektur gibt es hierfür im Wesentlichen zwei bekannte Möglichkeiten. Die eine Möglichkeit besteht darin, das Rot-, Grün- und Blausignal (RGB-Signal) des gesamten Bildes mit dem IR-Signal zu verrechnen. Bei diesem Verfahren werden insbesondere leichte Defekte, bei denen eine Rest-RGB-Information erhalten wird, unter Berücksichtigung dieser Restbildinformation korrigiert. Dieses Verfahren ist sehr effizient, da die Scans als Gesamtes miteinander verrechnet werden können, ohne daß einzelne Pixel betrachtet werden müssen. Bei sehr starken Defekten, bei denen keine Restbildinformation vorhanden ist, kann dieses Verfahren jedoch zu fehlerhaften Ergebnissen führen. Hierfür bietet sich die zweite Möglichkeit zur Fehlerkorrektur an. Diese beruht darauf, die fehlerhaften Pixel zu kennzeichnen, deren Bildwerte durch die Bildwerte benachbarter Pixel zu ersetzen. Es ist zu erwarten, daß dieses Interpolations-Verfahren vor allem bei starken Defekten in sehr gleichmäßigen Flächen sehr gute Ergebnisse liefert. Letzteres Verfahren ist jedoch sehr aufwendig, da einzelne Pixel abgespeichert und bearbeitet werden müssen.

Grundsätzlich ist jedoch bei der bekannten Defekterkennung bei der digitalen Bildverarbeitung anzumerken, daß für den zusätzlich erforderlichen IR-Scan eine infrarot-korrigierte und damit kostenintensive Optik erforderlich ist. Ferner ist Infrarotstrahlung als Wärmestrahlung kritisch zu handhaben, da sie beispielsweise bei Absorptionsfiltem oder anderen optischen Bestandteilen zur Erwärmung des Bauteils führt und durch Kühlung oder andere Maßnahmen abgeführt werden muß

Es ist Aufgabe der vorliegenden Erfindung, ein Verfahren und eine Vorrichtung zur Defekterkennung bei der digitalen Bildverarbeitung so auszugestalten, daß bei einfachem und kostengünstigem Aufbau dennoch eine hochqualitative Defekterkennung erzielt wird.

Gelöst wird die Aufgabe durch ein Verfahren und eine Vorrichtung mit der Merkmalskombination von Anspruch 1, 4 bzw. 14. Erfindungsgemäß wird neben der Erzeugung einer Vielzahl von sichtbaren Bildern noch ein zusätzliches, sichtbares Bild (eine Defektaufnahme) im zumindest geringen spektralen Dichtebereich des Speichermediums erzeugt, welches Defekte und/oder Helligkeitsschwankungen bei der Bildaufnahme erkennt. Mit anderen Worten, gegenüber dem Stand der Technik wird ein IR-Scan vermieden bzw. durch einen zusätzlichen optischen Scan ersetzt. Hierdurch ist keine zusätzliche, kostenintensive Optik bei den erfindungsgemäßen Verfahren und bei der erfindungsgemäßen Vorrichtung erforderlich, sondern es kann auf die herkömmliche, für den sichtbaren Bereich ausgelegte, kostengünstige Optik zurückgegriffen werden. Gleichzeitig ist die Detektion und Korrektur der Fehlstellen exakter, da das Licht, das bei diesem Verfahren und dieser Vorrichtung zu Detektion und Korrektur verwendet wird, dieselbe spektrale Charakteristik aufweist wie das Licht, mit dem die Bilddaten ermittelt werden, während das infrarote Licht andere Streueigenschaften aufweist.

Um eine Kombination der Defektaufnahme mit den sichtbaren Bildern oder eine Interpolation der defekten Stellen im Bild zu ermöglichen, werden vorzugsweise die Defektstellen in dem Speichermedium und/oder Partikel auf dem Speichermedium lokalisiert und abgespeichert. Anschließend können die lokalisierten Defekte mittels Interpolation von Werten der Umgebung des defekten Pixels oder mittels Ersetzen defekter Bildstellen durch eine einheitliche Farbe oder Bildinformation eines ähnlichen Bildes (z. B. bei Videofilmen) korrigiert werden.

Alternativ können die Helligkeitsschwankungen des Speichermediums, die z. B. aufgrund von Defekten oder Partikeln verursacht werden und/oder Helligkeitsschwankungen einer verwendeten Optik (z. B. Randabfall der Linsen) und/oder des verwendeten Aufnahmemediums (z. B. defekte Pixel des CCDs) unmittelbar durch das Zusammenwirken der Vielzahl von sichtbaren Bildern mit dem zusätzlichen, sichtbaren Bild kompensiert werden.

Bei üblichen Filmen hat es sich als vorteilhaft herausgestellt, das zusätzliche, sichtbare Bild in einem Wellenlängenbereich von ca. 580 bis 630 nm, vorzugsweise 590 bis 610 nm, zu erzeugen, da hier in der Regel das Minimum der spektralen Dichte der Filme im optischen Spektralbereich auftritt und die Dichte der Filmmaske gering ist. Alternativ kann das sichtbare Bild im Wellenlängenbereich von ca. 480 bis 530 nm mit zumindest geringer spektraler Dichte erzeugt werden. Es ist auch vorteilhaft, das zusätzliche, sichtbare Bild in einem Wellenlängenbereich von ca. 390 bis 430 nm oder 740 bis 780 nm aufzunehmen, da hier kein Überlapp zweier Farben auftritt.

Gemäß einem bevorzugten Ausführungsbeispiel der vorliegenden Erfindung schließt das Leiten der Energie von der Lichtquelle das in einer beliebigen Reihenfolge hintereinander erfolgte Leiten von Rot-, Grün- und Blaulicht in das Speichermedium und das anschließende Feststellen eines entsprechenden Rot-, Grün- und Blaubildes von dem Speichermedium ein. Hierdurch sind die erfindungsgemäßen Verfahren und die erfindungsgemäße Vorrichtung bei gängigen Bildverarbeitungen einsetzbar oder können auch mit geringem Aufwand in bestehenden Bildverarbeitungen nachgerüstet werden.

Um den Aufbau der erfindungsgemäßen Vorrichtung zu vereinfachen, wird die Energie der Vielzahl von sichtbaren Bildern und des zusätzlichen Bildes über den gleichen optischen Weg geleitet. Alternativ kann jedoch zur Verringerung der Bildverarbeitungszeit die Energie der Vielzahl von sichtbaren Bildern und des zusätzlichen, sichtbaren Bildes über jeweils getrennte optische Wege geleitet werden. Dies führt zwar einerseits zu einer aufwendigeren Vorrichtung, dient aber andererseits, wie bereits ausgeführt, zu einer schnelleren Bildverarbeitung.

Vorzugsweise wird als Speichermedium ein Film verwendet. Hierbei kann der Film Bildinformationen enthalten, die als Farbbild gespeichert sind. Gleichzeitig kann das Speichermedium weitgehend reflektierend sein. Alternativ kann das Speichermedium auch ein Druck sein.

Schließlich kann natürlich bei den erfindungsgemäßen Verfahren sowie der erfindungsgemäßen Vorrichtung an den erkannten Defektstellen und/oder Helligkeitsschwankungen ein Korrekturverfahren durchgeführt werden. Hierzu bieten sich insbesondere die eingangs genannten beiden Korrekturverfahren an.

Weitere Einzelheiten und Vorteile der Erfindung ergeben sich aus der Beschreibung von Ausführungsbeispielen, die anhand der Zeichnungen eingehend erläutert werden.

Es zeigen:
- Fig. 1: eine schematische Darstellung eines ersten Ausführungsbeispiels einer erfindungsgemäßen Vorrichtung,
- Fig. 2: eine schematische Darstellung eines erfindungsgemäßen Filterrades für das erste Ausführungsbeispiel,
- Fig. 3: eine schematische Darstellung eines zweiten Ausführungsbeispiels der erfindungsgemäßen Vorrichtung und
- Fig. 4: die spektralen Dichtekurven eines Filmes in Abhängigkeit von verschiedenen Lichtwellenlängen.

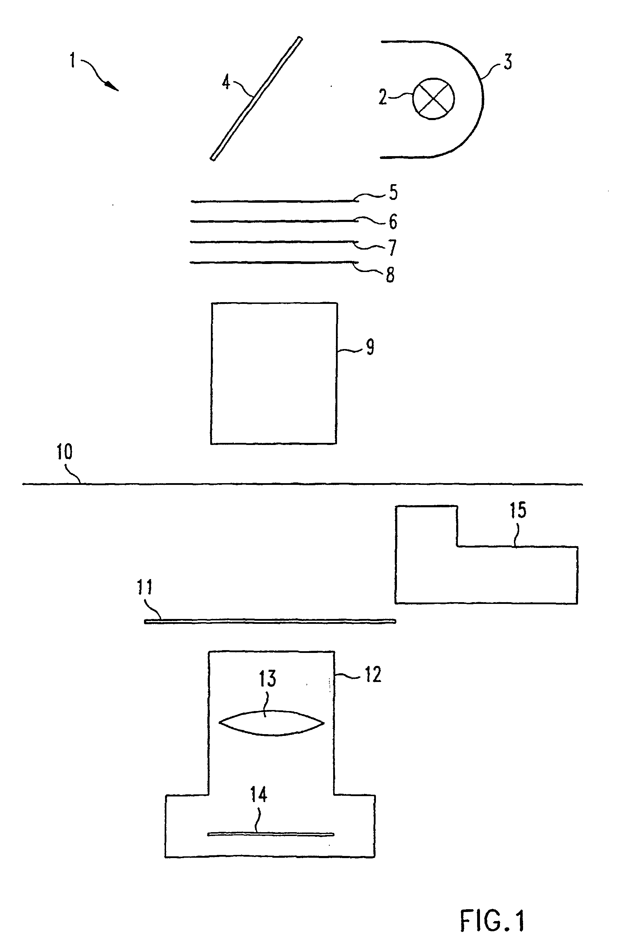

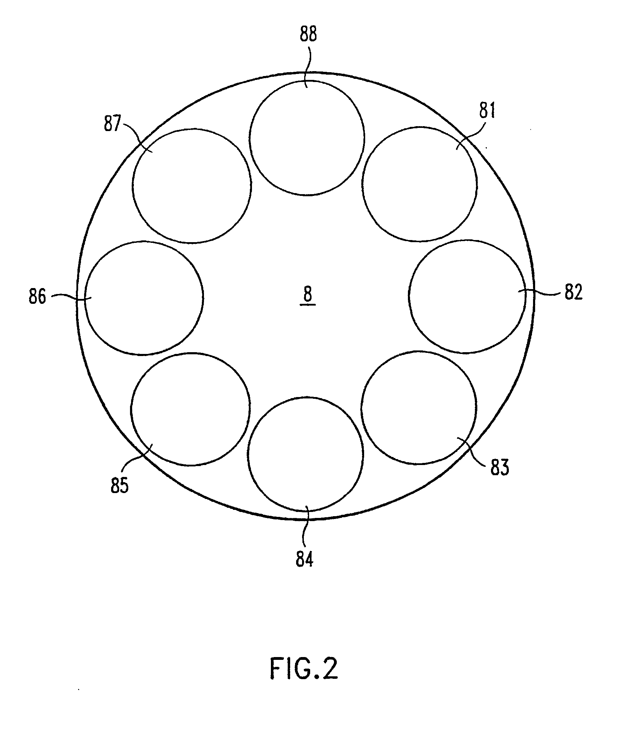

In Fig. 1 ist der schematische Aufbau eines ersten Ausführungsbeispiels der erfindungsgemäßen Vorrichtung zur Defekterkennung und/oder -korrektur bei der digitalen Bildverarbeitung dargestellt. Die erfindungsgemäße Vorrichtung 1 weist eine Lampe 2, insbesondere eine Halogenlampe, auf, welche von einem Reflektor 3 teilweise umgeben ist, der das von der Lampe 2 abgegebene Licht zu einem Spiegel 4, insbesondere Kaltlichtspiegel, ablenkt. Der Kaltlichtspiegel 4 lenkt das vom Reflektor 3 und direkt von der Lampe 2 stammende Licht auf ein Filter-Paddel 5. Das Licht tritt durch das Filter-Paddel 5 sowie daran anschließend durch einen Lichtabschwächer 6, einen Verschluß 7 sowie ein Filterrad 8. Hierbei weist das Filterrad 8 sowohl für Negative als auch für Dias Farbfilter auf. Wie in Fig. 2 dargestellt, sind Rot-, Grün- und Blaufilter (81, 82, 33) für Negative sowie Rot-, Grün- und Blaufilter (85, 86, 87) für Dias und Zusatzfilter (84, 88) für den zusätzlichen Scan für Negative und Dias vorgesehen. Es ist möglich, die Filter für die Diascans wegzulassen und die Dias ebenfalls mit den für Negative vorgesehenen Filtem 81 bis 84 zu scannen. Die Zusatzfilter (84, 88) sind für Licht der angegebenen, vorteilhaften Wellenlängenbereiche (z. B. 590 bis 610 nm - also für gelbes Licht) durchlässig.

Es wäre auch möglich, auf das Filterrad zu verzichten und einen TFA(Thin Film on ASIC)-Detektor anstelle des CCD-Arrays 14 einzusetzen (s. hierzu die Veröffentlichung Sommer, M. et al "First Multispectral Diode Color Imager With Three Color Recognition And Color Memory In Each Pixel", 1999 IEEE Workshop on CCDs and Advanced Image Sensors, Nagano, Japan). Mit diesem könnte das Filterspektrum sowohl auf die Farbdichtemaxima als auch auf ein für das Ermitteln des Defektsignals vorteilhafterweise zu verwendendes, filmtypabhängiges Dichteminimum eingestellt werden.

An das Filterrad 8 in Fig. 1 schließt sich gemäß dem Strahlungsweg ein Spiegelschacht 9 an, von dem das hindurchtretende Licht auf einen zu verarbeitenden Film 10 auftrifft und durch diesen Film 10 hindurchtritt. Das nunmehr durch den Film 10 hindurchgetretene Licht durchläuft einen Dust-Shutter/Lichtabschwächer 11 in Form eines NG-Glases und tritt schließlich in eine versiegelte Einheit 12 aus Linse 13 und CCD-Array 14 ein.

Zwischen Film 10 und Lichtabschwächer 11 befindet sich noch ein so genannter Prescanner 15, welcher der Vorabtastung oder Vorlauf-Abtastung dient. Der Zweck der Vorabtastung besteht darin, Vorabinformation über die Dichte des Films 10 zu erhalten, der das Objekt enthält, für welches die Bildeingabe erfolgen soll. Auf der Grundlage der hierdurch erhaltenen Information wird die optimale Beleuchtung der Bildebene ausgewählt. Weiterhin kann der Prescanner 15 auch zur Messung von Filmdichtedaten usw., wie allgemein bekannt, eingesetzt werden.

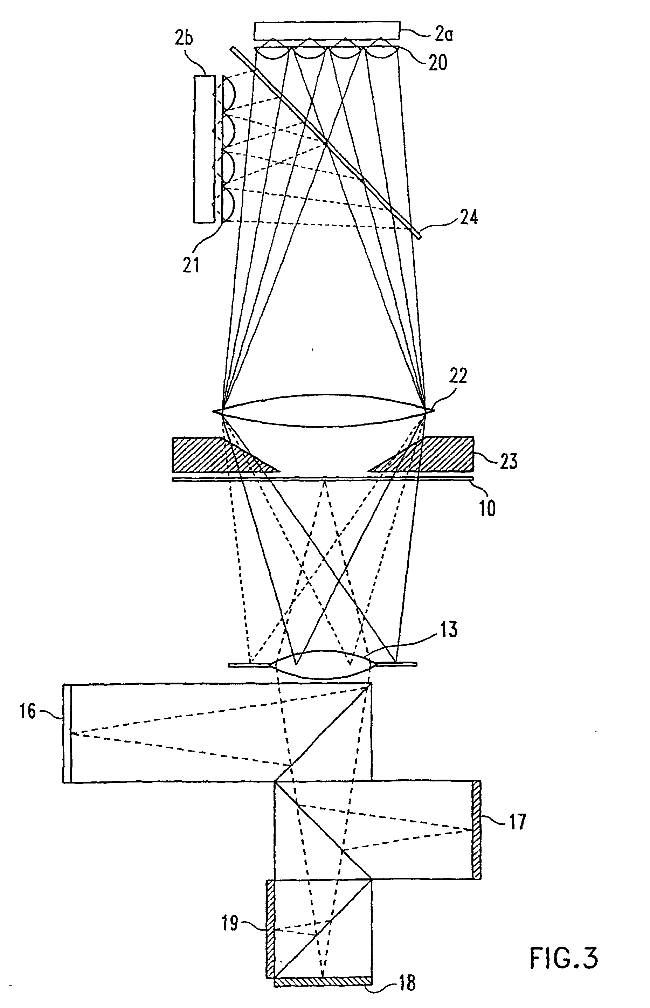

In Fig. 3 ist schematisch der Lichtstrahlweg eines zweiten Ausführungsbeispiels der erfindungsgemäßen Vorrichtung vom Austritt aus der Lampe 2 bis zum Einfall in die CCD-Array 14 dargestellt. Hierbei besteht die CCD-Array 14 aus vier CCD-Chips 16 bis 19, wie später noch beschrieben wird. Außerdem werden anstelle einer herkömmlichen Lampe LEDs verwendet, wobei etwa in Fig. 3 die horizontale LED-Anordnung 2a das blaue und grüne Licht sowie die vertikale LED-Anordnung 2b das rote und das zusätzliche, insbesondere gelbe Licht erzeugt. Anstelle von LEDs, die gelbes Licht emittieren, können auch LEDs verwendet werden, die Licht im Wellenlängenbereich von 480 bis 530 nm, 390 bis 430 nm oder 740 bis 780 nm aussenden, wie bereits für die Farbfilter im ersten Ausführungsbeispiel erläutert.

Das aus den LEDs 2a, 2b austretende Licht durchtritt eine Linsenanordnung 20 bzw. 21, wird teilweise durch einen dichroitischen Strahlteiler 24 umgeleitet und trifft auf die Kondensorlinse 22 auf. Von der Kondensorlinse wird das einfallende Licht auf die Linse 13 mit Abbildungsobjektiv fokussiert, wobei das Licht vor dem Auftreffen auf die Linse 13 den Film 10 durchtritt, oberhalb welchem sich die allgemein bekannte Filmbühne 23 befindet. Das Licht durchtritt die Linse 13 und wird entsprechend den für die Bildverarbeitung relevanten Spektralfarben, vorwiegend Rot, Grün, Blau und Gelb - oder eine entsprechende andere Farbe zum Ermitteln des Defektsignals - aufgeteilt sowie die jeweiligen Spektrallinienanteile werden zu den jeweils zugeordneten CCD-Chips 16 bis 19 umgelenkt. In Fig. 3 wird das Gelblicht, welches das zusätzliche, sichtbare Bild erzeugt, auf den CCD-Chip 16, sowie das Rot-, Grün- und Blaulicht auf die CCD-Chips 17 bis 19 in dieser Reihenfolge umgelenkt.

Hierbei werden die roten, grünen und blauen Signale der zugeordneten CCD-Chips für die Erzeugung des gesamten Bildes verrechnet. Treten nun Defekte im oder auf dem Film in Form von Staub oder Kratzern auf, werden sich diese Defekte bei der Erzeugung des Gesamtbildes aus den Rot-, Grün- und Blausignalen wiederfinden. Um diese Defekte zu erkennen und/oder zu korrigieren, wird jedoch gemäß der vorliegenden Erfindung zusätzlich Licht mit 580 bis 630 nm, vorzugsweise 590 bis 610 nm, oder Licht eines der oben genannten alternativen Wellenlängenbereiche bei der erfindungsgemäßen Vorrichtung eingesetzt. Dieses Licht dient zur Defektmarkierung, d. h. das nach dem Durchtritt durch den Film mit Defekt auf den "Defekt-CCD-Chip" treffende Licht erzeugt ein Defektsignal, welches die genaue Position des Defekts/der Defekte im oder auf dem Film kennzeichnet. Oder es dient zur direkten Defektkorrektur, d. h. das auf dem "Defekt-CCD-Chip" erzeugte Bild wird mit den anderen sichtbaren Bildem kombiniert.

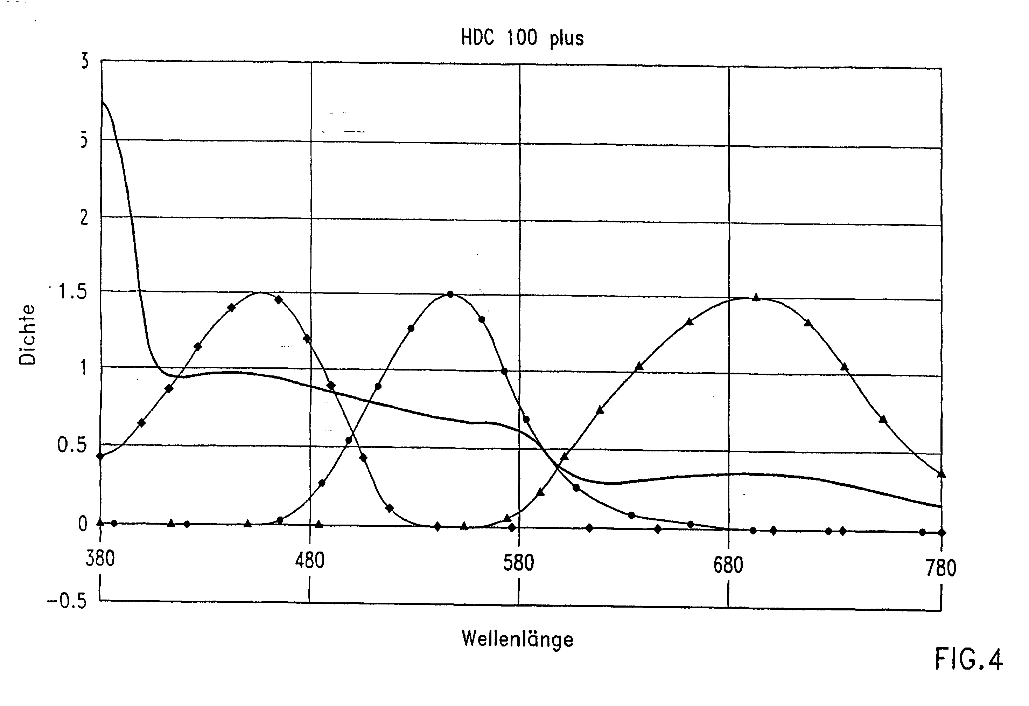

Das Defektsignal enthält Informationen über Defekte im Speichermedium, Partikel auf diesem, eventuelle Helligkeitsabfälle - bedingt durch die lichtleitende Optik oder Fehler des Aufnahmemediums -, welche der Einfachheit halber im Folgenden unter dem Begriff "Defekte" zusammengefaßt werden sollen, da all diese Größen auch in den R-, G-, B-Signalen enthalten sind und aus diesen eliminiert werden sollen. Femer enthält das Defektsignal im sichtbaren Bereich im Gegensatz zum Infrarotsignal ein schwaches Bildsignal, also bei z. B. Gelblicht einen reduzierten Anteil des Rot- und des Grünsignals, sowie das von der Filmmaske resultierende Signal. Dieses Restbildsignal ist dem Defektsignal überlagert, da sowohl die spektrale Dichte des Films als auch die Maskendichte im Bereich des sichtbaren Spektrums nicht vollständig auf Null zurückgeht, wie Fig. 4 zu entnehmen ist. Bei maximaler Belichtung eines Films ergeben sich (beispielsweise für den Filmtyp HDC 100 plus) nach der Entwicklung die in Fig. 4 dargestellten Farbdichten für Blau (□ ), Grün (○) und Rot (Δ) sowie die Maskendichte (-). Diese Kurven können für verschiedene Filmtypen leicht unterschiedlich sein.

Um die bereinigten Rot-, Grün- und Blauwerte zu berechnen - also eine Defektkorrektur vorzunehmen - werden in vier Aufnahmen im sichtbaren Bereich die Rot-, Grün-, Blau- und die Defektdichte (DR, DG, DB, DD) ermittelt. Die Dichten der Filmmaske (MR, MG, MB, MD) in den entsprechenden Spektralbereichen sind entweder von den Filmdaten bekannt und in Tabellen abgelegt, aus denen sie nach Ermittlung des Filmtyps geholt werden oder ergeben sich aus Aufnahmen an den Positionen der unbelichteten Filmstege. Damit lassen sich für die korrigierten Rot-, Grün-, Blau- und Defektwerte (R, G, B, D) folgende Gleichungen aufstellen:
R=DR-MR-D
G=DG-MG-D
B=DB-MB-D
D=DD-MD-α·R-β·G.

α und β sind filmabhängige Größen, welche ebenfalls in Tabellen abgelegt werden können, aus denen sie nach Ermittlung des Filmtyps geholt werden. In erster Näherung können α und β auch als gleich groß angenommen werden, so daß sich das Gleichungssystem vereinfachen läßt.

Aus diesen Gleichungen lassen sich somit die Farb- und Defektwerte einfach ermitteln. Die Farbwerte geben das defektkorrigierte Bild wieder, aus dem sich die Position und die Stärke der Defekte ergeben. Daten über Position und Stärke der Defekte werden insbesondere dann benötigt, wenn die Signale aufgrund sehr starker Defekte auf Null reduziert sind. In diesem Fall ist eine Interpolation der Bilddaten notwendig, da ein sinnvolles Lösen des Gleichungssystems nicht möglich ist.

In einem weiteren vorteilhaften Ausführungsbeispiel ergibt sich ein einfacheres Gleichungssystem, wenn das Defektsignal beispielsweise im Bereich von 390 bis 430 nm aufgenommen wird. Hier gilt für das Defektsignal: D = DD - MD - γ ^{·} B. Allerdings unterscheidet sich hier das Defektsignal nicht so stark vom Farbsignal wie bei Aufnahme des Defektsignals im Bereich von 580 bis 630 nm, so daß das Ergebnis einfacher zu ermitteln, aber unter Umständen ungenauer ist.

Neben der Defekterkennung im oder auf dem Film können durch den Einsatz von z. B. Gelblicht zusätzlich zu den herkömmlichen Farben Rot, Grün und Blau auch Helligkeitsschwankungen beim Scanner unmittelbar kompensiert werden und es sind keine vorherigen Kalibrierungen oder dergleichen erforderlich, da derartige Schwankungen, aufgrund etwa eines Randabfalls bei den CCD-Chips, Objektiv-Ungenauigkeiten, Filter-Ungenauigkeiten usw. sich sowohl in dem Gelbsignal als auch in den Rot-, Grün- und Blausignalen wiederfinden und demgemäß bei der Korrektur eliminiert werden. Derartige Randabfälle werden aber bei herkömmlichen Erkennungsverfahren durch zu erstellende Kalibrierungskurven, welche bei dem anschließenden Korrekturverfahren berücksichtigt werden, kompensiert.

Alternativ zu dem in Fig. 1 dargestellten Strahlengang, bei welchem sowohl das Gelblicht als auch das Rot-, Grün- und Blaulicht über den gleichen optischen Weg geleitet werden, können natürlich auch die unterschiedlichen Spektralbereiche über getrennte optische Wege geführt werden. Auch ist denkbar, das Defektlicht jeweils in Kombination mit dem Rot- und/oder Grün- und/oder Blaulicht durch den optischen Weg, d. h. die Elemente 13 und 20 bis 24, hindurchzuschicken.

Im vorliegenden Ausführungsbeispiel wurde ein Film 10 als Speichermedium verwendet. Alternativ kann das Speichermedium 10 natürlich auch ein Druck sein. Zudem kann der Film als Farbbild gespeicherte Bildinformationen enthalten und weitgehend reflexiv sein.

Weitere Änderungen und Modifikationen des oben beschriebenen Ausführungsbeispiels sind möglich, ohne den Schutzumfang der beigefügten Ansprüche zu verlassen.

Hierzu 4 Blatt Zeichnungen

## Patentansprüche

1. Verfahren zur Defekterkennung bei der digitalen Bildverarbeitung mit den folgenden Schritten:
- Leiten von elektromagnetischer Energie einer Lichtquelle (2) auf ein optisches Speichermedium (10), das Bildinformation enthält, wobei Energie im sichtbaren Bereich des elektromagnetischen Spektrums verwendet wird, und
- Erzeugen einer Vielzahl von sichtbaren Bildern, indem die von dem Speichermedium (10) abgegebene Energie mittels einer Aufnahmeeinrichtung (14,17,18,19) in mehreren spektralen Bereichen aufgenommen wird, **dadurch gekennzeichnet, dass** ein zusätzliches, sichtbares Bild in einem spektralen Bereich zumindest geringer spektraler Dichte des Speichermediums (10) erzeugt wird, wobei in dem zusätzlichen Bild Defekte und/oder Helligkeitsschwankungen bei der Bildaufnahme zu erkennen sind.

2. Verfahren nach Anspruch 1, **dadurch gekennzeichnet, dass** Defektstellen im aufgenommenen Bild, die Defektstellen in dem Speichermedium (10) und/oder Partikel auf dem Speichermedium (10) entsprechen, markiert werden.

3. Verfahren nach Anspruch 1 oder 2, **dadurch gekennzeichnet, dass** an den markierten Defektstellen ein Korrekturverfahren durchgeführt wird.

4. Verfahren zur Defektkorrektur bei der digitalen Bildverarbeitung mit den folgenden Schritten:
- Leiten von elektromagnetischer Energie einer Lichtquelle (2) auf ein Speichermedium (10), das Bildinformation enthält, wobei Energie im sichtbaren Bereich des elektromagnetischen Spektrums verwendet wird, und
- Erzeugen einer Vielzahl von sichtbaren Bildern, indem die von dem Speichermedium (10) abgegebene Energie mittels eines Aufnahmemediums (14,17,18,19) in mehreren spektralen Bereichen aufgenommen wird, **dadurch gekennzeichnet, dass** ein zusätzliches, sichtbares Bild in einem spektralen Bereich zumindest geringer spektraler Dichte des Speichermediums (10) erzeugt wird, in dem Defekte und/oder Helligkeitsschwankungen bei der Bildaufnahme zu erkennen sind und
- Korrigieren der Defekte und/oder Helligkeitschwankungen in der Vielzahl von sichtbaren Bilder durch Kombination dieser Bilder mit dem zusätzlichen, sichtbaren Bild.

5. Verfahren nach Anspruch 4, **dadurch gekennzeichnet, dass** Helligkeitsschwankungen aufgrund von Defekten im Speichermediums (10) oder Partikeln auf dem Speichermedium (10) kompensiert werden.

6. Verfahren nach Anspruch 5, **dadurch gekennzeichnet, dass** das Korrekturverfahren eine Interpolation umfasst.

7. Verfahren nach Anspruch 4, **dadurch gekennzeichnet, dass** Helligkeitsschwankungen einer zum Leiten von Energie einer Lichtquelle (2) verwendeten Einrichtung (4 bis 9, 11, 13) und/oder Bilderzeugungseinrichtung (12) kompensiert werden.

8. Verfahren nach einem der Ansprüche 1 bis 7, **dadurch gekennzeichnet, dass** das zusätzliche, sichtbare Bild in einem Wellenlängenbereich von 580 bis 630 nm, vorzugsweise 590 bis 610 nm, erzeugt wird.

9. Verfahren nach einem der Ansprüche 1 bis 7, **dadurch gekennzeichnet, dass** das zusätzliche, sichtbare Bild in einem Wellenlängenbereich von 480 bis 530 nm erzeugt wird.

10. Verfahren nach einem der Ansprüche 1 bis 7, **dadurch gekennzeichnet, dass** das zusätzliche, sichtbare Bild in einem Wellenlängenbereich von 390 bis 430 oder 740 bis 780 nm erzeugt wird.

11. Verfahren nach einem der Ansprüche 1 bis 10, **dadurch gekennzeichnet, dass** die elektromagnetische Energie der Vielzahl von sichtbaren Bildern und des zusätzlichen, sichtbaren Bildes über den gleichen optischen Weg geleitet wird.

12. Verfahren nach einem der Ansprüche 1 bis 10, **dadurch gekennzeichnet, dass** die elektromagnetische Energie der Vielzahl von sichtbaren Bildern und des zusätzlichen, sichtbaren Bildes über jeweils getrennte optische Wege geleitet wird.

13. Verfahren nach einem der Ansprüche 1 bis 12, **dadurch gekennzeichnet, dass** als Speichermedium (10) vorzugsweise ein Film verwendet wird.

14. Vorrichtung zur Defekterkennung bei der digitalen Bildverarbeitung mit einer Einrichtung (4 bis 9) zum Leiten von elektromagnetischer Energie einer Lichtquelle (2) auf ein optisches Speichermedium (10), das Bildinformation enthält, wobei Energie im sichtbaren Bereich des elektromagnetischen Spektrums verwendet wird, mit einer Einrichtung (12) zur Erzeugung einer Vielzahl von sichtbaren Bildern, die eine Aufnahmeeinrichtung (14,17,18,19) umfasst, zum Aufnehmen der von dem Speichermedium (10) abgegebenen Energie, **dadurch gekennzeichnet, dass** eine Einrichtung (16, 84, 88) zur Erzeugung eines zusätzlichen, sichtbaren Bildes im zumindest geringen Farbempfindlichkeksbereich des Speichermediums (10) vorgesehen ist, wobei das zusätzliche, sichtbare Bild Defekte und/oder Helligkeitsschwankungen bei der Bildaufnahme enthält.

15. Vorrichtung nach Anspruch 14, **dadurch gekennzeichnet, daß** als Einrichtung zur Erzeugung eines zusätzlichen, sichtbaren Bildes ein Farbfilter (84 und/oder 88) vorgesehen ist.

16. Vorrichtung nach Anspruch 15, **dadurch gekennzeichnet, daß** der Farbfilter ein Gelbfilter ist.

17. Vorrichtung nach Anspruch 15, **dadurch gekennzeichnet, daß** der Farbfilter im Bereich von 580 bis 630 nm, vorzugsweise 590 bis 610 nm transparent ist.

18. Vorrichtung nach Anspruch 15, **dadurch gekennzeichnet, daß** der Farbfilter im Bereich von 480 bis 530 nm transparent ist.

19. Vorrichtung nach Anspruch 15, **dadurch gekennzeichnet, daß** der Farbfilter im Bereich von 390 bis 430 oder 740 bis 780 nm transparent ist.

20. Vorrichtung nach einem der Ansprüche 14 bis 19, **dadurch gekennzeichnet, daß** die Einrichtung (4 bis 9) die Energie der Vielzahl von sichtbaren Bildern und des zusätzlichen, sichtbaren Bildes über den gleichen optischen Weg leitet.

21. Vorrichtung nach Anspruch 14, **dadurch gekennzeichnet, dass** die Einrichtung zur Erzeugung eines zusätzlichen, sichtbaren Bildes einen Strahlteiler aufweist.

22. Vorrichtung nach Anspruch 14, **dadurch gekennzeichnet, dass** die Lichtquelle (2) LEDs aufweist.

23. Vorrichtung nach Anspruch 22, **dadurch gekennzeichnet, dass** die Lichtquelle (2) LEDs aufweist, die im Bereich von 580 bis 630 nm, vorzugsweise 590 bis 610 nm, emittieren.

24. Vorrichtung nach einem der Ansprüche 14 bis 23, **dadurch gekennzeichnet, dass** das Speichermedium (10) ein Film ist.

## Claims

1. Method for identifying defects during digital image processing with the following steps:
- routing electromagnetic energy of a light source (2) to an optical storage medium (10) containing image information, wherein energy in the visible range of the electromagnetic spectrum is used, and
- generating a large number of visible images in that the energy emitted by the storage medium (10) is received in a plurality of spectral ranges by means of a recording device (14, 17, 18, 19), **characterised in that** an additional visible image is generated in a spectral range of at least lower spectral density of the storage medium (10), defects and/or variations in brightness being identifiable in the additional image during image recording.

2. Method according to claim 1, **characterised in that** locations of defects in the image recorded which correspond to locations of defects in the storage medium (10) and/or particles on the storage medium (10) are marked.

3. Method according to claim 1 or 2, **characterised in that** a correction process is carried out on the marked location of defects.

4. Method for correcting defects during digital image processing with the following steps:
- routing electromagnetic energy of a light source (2) to a storage medium (10) containing image information, wherein energy in the visible range of the electromagnetic spectrum is used, and
- generating a large number of visible images in that the energy emitted by the storage medium (10) is recorded in a plurality of spectral ranges by means of a recording medium (14, 17, 18, 19), **characterised in that** an additional visible image is generated in a spectral range of at least lower spectral density of the storage medium (10), **in that** defects and/or variations in brightness can be identified during image recording and
- correction of the defects and/or variations in brightness in the large number of visible images owing to combining of these images with the additional visible image.

5. Method according to claim 4, **characterised in that** variations in brightness owing to defects in the storage medium (10) or particles on the storage medium (10) are compensated.

6. Method according to claim 5, **characterised in that** the correction process comprises an interpolation.

7. Method according to claim 4, **characterised in that** variations in brightness of a device (4 to 9, 11, 13) used to route energy of a light source (2) and/or of an image generating device (12) are compensated.

8. Method according to any of claims 1 to 7, **characterised in that** the additional visible image is generated in a wavelength range of 580 to 630 nm, preferably 590 to 610 nm.

9. Method according to any of claims 1 to 7, **characterised in that** the additional visible image is generated in a wavelength range of 480 to 530 nm.

10. Method according to any of claims 1 to 7, **characterised in that** the additional visible image is generated in a wavelength range of 390 to 430 or 740 to 780 nm.

11. Method according to any of claims 1 to 10, **characterised in that** the electromagnetic energy of the large number of visible images and of the additional visible image is routed via the same optical path.

12. Method according to any of claims 1 to 10, **characterised in that** the electromagnetic energy of the large number of visible images and of the additional visible image is routed via respective separate optical paths.

13. Method according to any of claims 1 to 12, **characterised in that** a film is preferably used as the storage medium (10).

14. Device for identifying defects during digital image processing comprising a device (4 to 9) for routing electromagnetic energy of a light source (2) to an optical storage medium (10) containing image information, wherein energy in the visible range of the electromagnetic spectrum is used, comprising a device (12) for generating a large number of visible images, which comprises a recording device (14, 17, 18, 19) for recording the energy emitted by the storage medium (10), **characterised in that** a device (16, 84, 88) for generating an additional visible image is provided in the at least slightly colour sensitive range of the storage medium (10), the additional visible image containing defects and/or variations in brightness during image recording.

15. Device according to claim 14, **characterised in that** a colour filter (84 and/or 88) is provided as a device for generating an additional visible image.

16. Device according to claim 15, **characterised in that** the colour filter is a yellow filter.

17. Device according to claim 15, **characterised in that** the colour filter is transparent in the range from 580 to 630 nm, preferably 590 to 610 nm.

18. Device according to claim 15, **characterised in that** the colour filter is transparent in the range from 480 to 530 nm.

19. Device according to claim 15, **characterised in that** the colour filter is transparent in the range from 390 to 430 or 740 to 780 nm.

20. Device according to any of claims 14 to 19, **characterised in that** the device (4 to 9) routes the energy of the large number of visible images and of the additional visible image via the same optical path.

21. Device according to claim 14, **characterised in that** the device for generating an additional visible image comprises a beam splitter.

22. Device according to claim 14, **characterised in that** the light source (2) comprises LEDs.

23. Device according to claim 22, **characterised in that** the light source (2) comprises LEDs which emit in the range from 580 to 630 nm, preferably 590 to 610 nm.

24. Device according to any of claims 14 to 23, **characterised in that** the storage medium (10) is a film.

## Revendications

1. Procédé destiné à la détection de défauts lors du traitement numérique d'images, comportant les phases suivantes consistant à :
- diriger de l'énergie électromagnétique d'une source lumineuse (2) sur un support de mémorisation optique (10) qui contient une information d'image, de l'énergie dans la plage visible du spectre électromagnétique étant utilisée, et
- générer une pluralité d'images visibles, de l'énergie délivrée par le support de mémorisation (10) étant absorbée dans plusieurs plages spectrales au moyen d'un dispositif de prise de vues (14, 17, 18, 19), **caractérisé en ce qu**'une image visible supplémentaire est générée dans une plage spectrale du support de mémorisation (10) de faible densité spectrale au moins, des défauts et/ou des variations de luminosité lors de la prise de vue pouvant être détectés dans l'image supplémentaire.

2. Procédé selon la revendication 1, **caractérisé en ce que** des emplacements défectueux dans l'image prise, qui correspondent à des emplacements défectueux du support de mémorisation (10) et/ou à des particules sur le support de mémorisation (10), sont marqués.

3. Procédé selon la revendication 1 ou 2, **caractérisé en ce qu'**un procédé de correction est appliqué au niveau des emplacements défectueux marqués.

4. Procédé destiné à la correction de défauts lors du traitement numérique d'images, comportant les phases suivantes consistant à :
- diriger de l'énergie électromagnétique d'une source lumineuse (2) sur un support de mémorisation (10) qui contient une information d'image, de l'énergie dans la plage visible du spectre électromagnétique étant utilisée, et
- générer une pluralité d'images visibles, de l'énergie délivrée par le support de mémorisation (10) étant absorbée dans plusieurs plages spectrales au moyen d'un support de prise de vues (14, 17, 18, 19), **caractérisé en ce qu'**une image visible supplémentaire est générée dans une plage spectrale du support de mémorisation (10) de faible densité spectrale au moins, dans laquelle des défauts et/ou des variations de luminosité lors de la prise de vue peuvent être détectés, et
- corriger des défauts et/ou des variations de luminosité dans la pluralité d'images visibles par une combinaison de ces images avec l'image visible supplémentaire.

5. Procédé selon la revendication 4, **caractérisé en ce que** des variations de luminosité dues à des défauts dans le support de mémorisation (10) ou à des particules sur le support de mémorisation (10) sont compensées.

6. Procédé selon la revendication 5, **caractérisé en ce que** le procédé de correction comprend une interpolation.

7. Procédé selon la revendication 4, **caractérisé en ce que** des variations de luminosité d'un dispositif (4 à 9, 11, 13) utilisé pour diriger de l'énergie d'une source lumineuse (2) et/ou d'un dispositif de génération d'images (12) sont compensées.

8. Procédé selon l'une quelconque des revendications 1 à 7, **caractérisé en ce que** l'image visible supplémentaire est générée dans une plage de longueur d'onde de 580 à 630 nm, de préférence de 590 à 610 nm.

9. Procédé selon l'une quelconque des revendications 1 à 7, **caractérisé en ce que** l'image visible supplémentaire est générée dans une plage de longueur d'onde de 480 à 530 nm.

10. Procédé selon l'une quelconque des revendications 1 à 7, **caractérisé en ce que** l'image visible supplémentaire est générée dans une plage de longueur d'onde de 390 à 430 nm ou de 740 à 780 nm.

11. Procédé selon l'une quelconque des revendications 1 à 10, **caractérisé en ce que** l'énergie électromagnétique de la pluralité d'images visibles, et de l'image visible supplémentaire, est dirigée par l'intermédiaire de la même voie optique.

12. Procédé selon l'une quelconque des revendications 1 à 10, **caractérisé en ce que** l'énergie électromagnétique de la pluralité d'images visibles, et de l'image visible supplémentaire, est dirigée par l'intermédiaire de voies optiques respectivement séparées.

13. Procédé selon l'une quelconque des revendications 1 à 12, **caractérisé en ce qu'**un film est de préférence utilisé en tant que support de mémorisation (10).

14. Dispositif destiné à la détection de défauts lors du traitement numérique d'images, comportant un dispositif (4 à 9) pour diriger de l'énergie électromagnétique d'une source lumineuse (2) sur un support de mémorisation optique (10) qui contient une information d'image, de l'énergie dans la plage visible du spectre électromagnétique étant utilisée, et un dispositif (12) destiné à la génération d'une pluralité d'images visibles, qui comporte un dispositif de prise de vues (14, 17, 18, 19) destiné à recevoir l'énergie délivrée par le support de mémorisation (10), **caractérisé en ce qu'**il est prévu un dispositif (16, 84, 88) pour générer une image visible supplémentaire, au moins dans la plage de sensibilité chromatique faible du support de mémorisation (10), l'image visible supplémentaire comportant des défauts et/ou des variations de luminosité lors la prise de vue.

15. Dispositif selon la revendication 14, **caractérisé en ce qu'**un filtre coloré (84 et/ou 88) est prévu en tant que dispositif destiné à la génération d'une image visible supplémentaire.

16. Dispositif selon la revendication 15, **caractérisé en ce que** le filtre coloré est un filtre jaune.

17. Dispositif selon la revendication 15, **caractérisé en ce que** le filtre coloré est transparent dans la plage de 580 à 630 nm, de préférence de 590 à 610 nm.

18. Dispositif selon la revendication 15, **caractérisé en ce que** le filtre coloré est transparent dans la plage de 480 à 530 nm.

19. Dispositif selon la revendication 15, **caractérisé en ce que** le filtre coloré est transparent dans la plage de 390 à 430 nm ou de 740 à 780 nm.

20. Dispositif selon l'une quelconque des revendications 14 à 19, **caractérisé en ce que** le dispositif (4 à 9) dirige l'énergie de la pluralité d'images visibles, et de l'image visible supplémentaire, par l'intermédiaire de la même voie optique.

21. Dispositif selon la revendication 14, **caractérisé en ce que** le dispositif destiné à la génération d'une image visible supplémentaire comporte un séparateur de faisceau.

22. Dispositif selon la revendication 14, **caractérisé en ce que** la source lumineuse (2) comporte des DEL.

23. Dispositif selon la revendication 22, **caractérisé en ce que** la source lumineuse (2) comporte des DEL qui émettent dans la -plage de 580 à 630 nm, de préférence de 590 à 610 nm.

24. Dispositif selon l'une quelconque des revendications 14 à 23, **caractérisé en ce que** le support de mémorisation (170) est un film.
